# EUROPEAN PATENT APPLICATION

(11) **EP 1 107 549 A2**
(43) Date of publication of application: **13.06.2001**
(21) Application number: 00310264.7
(22) Date of filing: 17.11.2000
(51) Int. Cl.: H04M 1/725, H04M 7/00

(54) **Broadcast data receiver apparatus and system supporting VoIP calls**

(30) Priority: 19.11.1999 GB 9927283
(71) Applicant: Pace Micro Technology Ltd, Saltaire, Shipley BD18 3LF (GB)
(72) Inventor: Trott, Andrew, Harrogate, North Yorkshire (GB)
(74) Representative: Wood, Graham

(57) **Abstract**

The invention relates to the ability to utilise a telecommunication connection preferably provided to a broadcast data receiver in a premises to allow the support of a Voice Over Internet Protocol (VoIP) telecommunications system such that the base station for the same can be provided in one embodiment as part of the receiver. This therefore allows the provision, if required, of a POTS telecommunication system and a VoIP system to be provided within the premises, with a DECT handset or handsets.

## Description

The invention to which this application relates is an improvement in the utilisation of apparatus provided to receive and process digital data which is broadcast from a remote location. In particular the receiver apparatus is provided in a premises to receive data relating to television programmes and associated information which is transmitted from the remote location by a television service provider. The data is transmitted via satellite, cable or terrestrial aerial systems. When the data is received by the receiver it is processed by the same and video and/or audio is generated to be displayed to the user of the apparatus in the premises via television or other display screen and speaker systems.

The use of receiver apparatus of the type described is becoming increasingly commonplace and developments in the same to provide additional services related to the apparatus are also known. A further feature of the apparatus is that there is provided a telecommunications link from the apparatus which provides a means for the transfer of data to and from the receiver apparatus. In addition the telecommunications link allows for the provision of a Voice Over Internet Protocol telecommunication system (VoIP) whereby a persons voice is typically carried by a handset such as a digitally enhanced cordless telephone (DECT) and, for transmission, the call is digitised into packets of data, transmitted via a Hybrid Fibre Coaxial cable and the internet to the intended recipient whereupon the packets of data are reconverted into a voice message. This type of system is increasingly being considered as a viable and, in many ways advantageous, alternative to the traditional phone system (POT's) even though it can use up a significant amount of available data bandwidth.

There are however some known problems with the VoIP system, one of which is that if the receiver apparatus loses power, then the VoIP system will not be operational. A further disadvantage is that if the VoIP system is to be used there will be a need for a new telephone number to be allocated which can cause confusion and effectively means that two separate networks are required to be maintained. It is also difficult to disconnect an existing public switched telephone network (PSTN) from the existing POTS system and transfer it to the VoIP system.

The aim of the present invention is to utilise the receiver apparatus to advantage in the implementation of the VoIP system and associated telephone apparatus within a premises.

In one aspect of the invention there is provided a telephone system in a premises which includes a base station with a telecommunications link to an external telecommunications line which supports a VoIP telecommunication system and a handset for use with the base station characterised in that a phone call initiated from the premises via the handset is converted into a VoIP telephone call via the base station and incoming calls are received via a POT's telephone system and can be answered by the selective use of handsets for the VoIP or POT's telephone systems.

In a preferred embodiment the base station is part of the receiver apparatus, which receiver apparatus is provided to receive broadcast data from a remote location, process the data, and generate audio and/or video, with the receiver apparatus connected to a display screen and/or television set for the display of the television programmes or ancillary data. Typically the telecommunications link between the receiver apparatus and a Hybrid fibre coaxial cable (HFC) is used to carry the telephone call in VoIP when transmitted.

In a further aspect of the invention the system as described is utilised in conjunction with a POTS system.

In a yet further aspect of the present invention there is provided receiver apparatus for receiving data which is broadcast from a remote location and for processing the data to allow the generation of audio and/or video via speakers and/or a display screen connected thereto and wherein said receiver apparatus incorporates a Digitally Enhanced Cordless Telephone (DECT) base station facility.

In a yet further aspect of the present invention there is provided broadcast data receiver apparatus for receiving data which is broadcast from a remote location and for processing the data to allow the generation of audio and/or video via speakers and/or a display screen connected thereto, said apparatus including a first digital telecommunications link to allow a VoIP telecommunication system to be supported and a second telecommunications link to a POTS telecommunication system.

In a further aspect there is provided a telecommunications system for a premises for receiving increasing telephone calls and generating outgoing calls, said system including VoIP and POT's telecommunication links to external telecommunication networks, and POT's and DECT telephone handsets and characterised in that outgoing telephone calls can be made via the VoIP telecommunication link and DECT telephone handset by the user and incoming calls are received via the POT's telecommunication link and the user selection of the POT's or DECT telephone handsets.

Specific embodiments of the invention are now described with reference to the accompanying diagrams; wherein
Figure 1 illustrates a conventional telecommunications system within a premises including broadcast data receiving apparatus; and
Figure 2 illustrates a telecommunications system in accordance with the present invention in one embodiment.

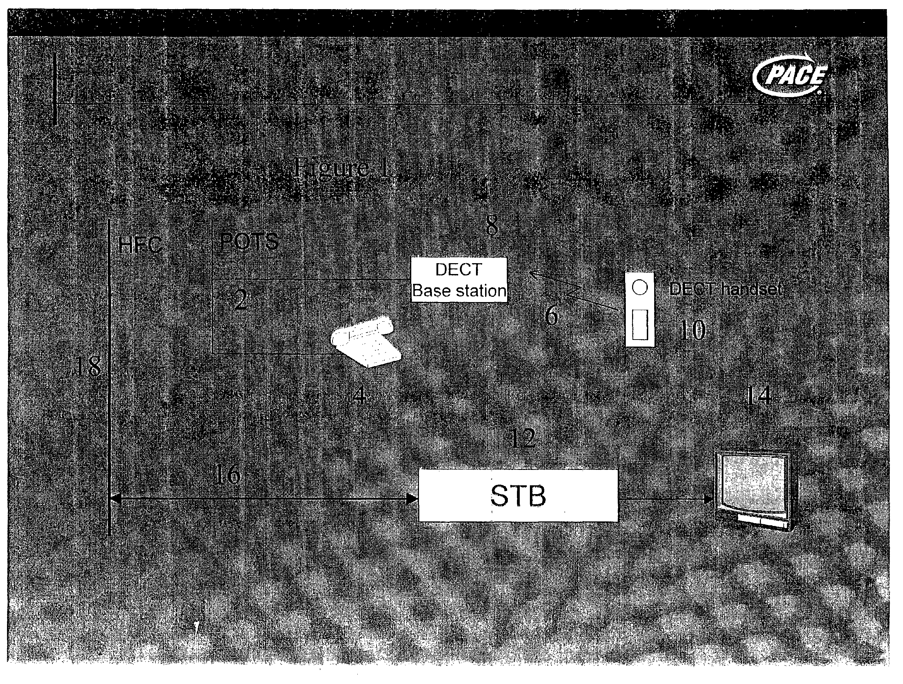

Referring firstly to figure 1 there is illustrated an example of a conventional system in, for example, a domestic premises. This system includes a POT's telecommunication line 2 which is connected to a standard POT's telephone 4, and a Digitally Enhanced Cordless telephone (DECT) 6 which comprises a base station 8 and handset 10.

In use of this system, if there is a power failure, the DECT telephone, which requires mains power supply is rendered inoperable but the standard or POT's telephone 4 remains active and can continue to be used which is useful and indeed may be legally required if, for example, emergency calls are required to be made.

Also illustrated in the premises is broadcast data receiver apparatus 12 of the type which is increasingly provided in premises and which is connected to a television set 14. The receiver apparatus is provided to receive data broadcast from a remote location such as by cable, satellite or terrestrial aerial transmission systems. The received data is typically used to generate television programmes on the television and/or ancillary services such as teletext, electronic programme guides and the like. The broadcast data receiver apparatus is also provided with a telecommunications link 16 which allows the transfer of data to and from the receiver apparatus via an HFC 18.

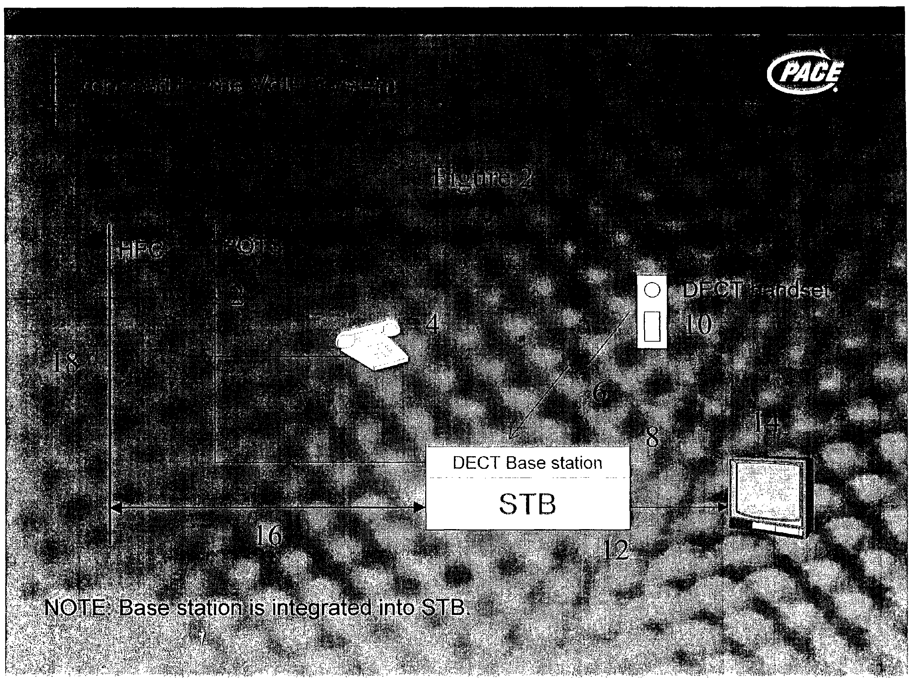

Figure 2 illustrates an embodiment of the current invention and shows an integration of apparatus in the premises which is of significant advantage. In the Figure, and using the same numbering as with Figure 1, the DECT telephone base station 8 is combined as part of the broadcast data receiver apparatus 12 and receives power from a power source for the broadcast data receiver; typically a mains supply. The POTS line 2 to the outside network is maintained and is still connected to the standard telephone set 4 and also now to the DECT telephone 6 via the broadcast data receiver apparatus.

With the conventional POT's system all telephone calls which are outgoing or incoming are sent via the POTS system and no use of the receiver apparatus is made. It would also be possible to utilise the broadcast data receiver apparatus system only but this would require a new, different telephone number to be allocated for this system and used for incoming calls. An emergency power supply would also be required to be provided for the broadcast data receiver apparatus so as to render the telephone system operational even in a mains power failure, which in many countries can be a legal requirement.

In contrast, the current invention as illustrated in Figure 2 allows the integration of the systems such that, the advantages of both can be obtained for the user. In use there are significant advantages to be obtained as is now illustrated.

If for example, an outgoing call is to be made the following procedure is followed. The DECT handset 10 is available to be used to make the outgoing call and, as it is connected to the receiver apparatus 12 the call can be converted to VoIP via the base station provided as part of the broadcast data receiver and sent via the telecommunications line 16 to the HFC 18. This means that the provider of the broadcast data receiver apparatus data service and the HFC link can receive revenue for the outgoing call and the service is in many cases more efficient for the user.

If an incoming call is received the existing telephone number which was provided for the conventional POT's system in the premises can be maintained. To enable this the call is received via the POTS line 2 and can be answered via the telephone handset 4 in the conventional manner. However, in accordance with the invention the call is also converted to allow the same to be received by the DECT base station so that the call can also be answered using the DECT handset 10. Thus when an incoming call is received all of the telephone handsets in the premises will ring. This allows the existing telephone number to be maintained and used. It also means that the user does not experience the confusion of having two separate systems and, as far as they are concerned, only one system appears to be in use.

A further advantage of the system as described with reference to Figure 2 is that the retention of the POTS telecommunications line 2 with the telephone handset 4 means that even if there is a power failure or other reason for failure of the DECT and/or VOIP system the user still has a means of making and receiving calls via the POT's system. This therefore means that there is no longer a need for an emergency power supply to be provided in the receiver apparatus or the DECT base station.

It is therefore submitted that the present invention provides a useful and inventive amalgam of telecommunication system for advantage to users and service providers alike. This is in contrast to the conventional provision of mutually exclusive systems.

It should also be noted that although reference is made to a POT's handset and a DECT handset, any practical combinations and numbers of handsets can be utilised in the premises as part of the invention.

## Claims

1. A telephone system in a premises which includes a base station with a telecommunications link to an external telecommunications line which supports a VoIP telecommunication system and a handset for use with the base station characterised in that a phone call initiated from the premises via the handset is converted into a VoIP telephone call via the base station and incoming calls are received via a POT's telephone system and can be answered by the selective use of handsets for the VoIP or POT's telephone systems.

2. A telephone system according to claim 1 characterised in that the base station is part of a broadcast data receiver apparatus, which receiver apparatus is provided to receive broadcast data from a remote location, process the data, and generate audio and/or video on a television set to which the receiver is connected.

3. A telephone system according to claim 2 characterised in that the telecommunications link between the receiver apparatus and a Hybrid fibre coaxial cable (HFC) is used to carry the telephone call in VoIP format when transmitted.

4. A telephone system according to claim 2 characterised in that the system is utilised in conjunction with a POTS system which connects to the base station.

5. A broadcast data receiver apparatus for receiving data which is broadcast from a remote location and for processing the data to allow the generation of audio and/or video via speakers and/or a display screen connected thereto and characterised in that said receiver apparatus incorporates a DECT telephone base station facility, for the generation of outgoing calls via a VoIP telecommunications system.

6. A broadcast data receiver according to claim 5 characterised in that the apparatus includes a first digital telecommunications link to allow a VoIP system to be supported and a second telecommunications link to a POTS system.

7. A broadcast data receiver according to claim 6 characterised in that outgoing calls are made via a DECT handset and via the VoIP system.

8. A broadcast data receiver according to claim 6 characterised in that incoming calls are received via the POT's system.

9. A broadcast data receiver according to claim 8 characterised in that the incoming call is converted to a base station to enable the incoming call to also be received by the DECT telephone handset.

10. A broadcast data receiver according to claim 5 characterised in that upon failure of the broadcast data receiver operation, the POT's system can be used for outgoing calls and incoming calls.

11. A broadcast data receiver according to claim 10 characterised in that the broadcast data receiver fails due to lack of power supply thereto.

12. A telecommunications system for a premises for receiving incoming telephone calls and generating outgoing calls, said system including VoIP and POT's telecommunication links to external telecommunication networks, and POT's and DECT telephone handsets for selective use and characterised in that outgoing telephone calls can be made via the VoIP telecommunication link and DECT telephone handset by the user and incoming calls are received via the POT's telecommunication link and accessed by the user selection of the POT's or DECT telephone handsets.

13. A system according to claim 12 characterised in that the incoming calls are transferred to the POT's and DECT handsets so that both systems ring to indicate receipt of a call.

14. A system according to claim 13 characterised in that the transfer of the incoming calls is performed via a DECT base station provided as part of a broadcast data receiver.

15. A broadcast data receiver apparatus for receiving data which is broadcast from a remote location and for processing the data to allow the generation of audio and/or video via speakers and/or a display screen connected thereto, said apparatus including a first digital telecommunications link to allow a VoIP telecommunication system to be supported and a second telecommunications link to a POTS telecommunication system.
